# FASCICULE DE BREVET EUROPEEN

(11) **EP 2 176 919 B1**
(45) Date de publication et mention de la délivrance du brevet: **04.07.2012**
(21) Numéro de dépôt: 08805646.0
(22) Date de dépôt: 04.06.2008
(51) Int. Cl.: H01M 4/13, H01M 4/133, H01M 4/139, H01M 4/62, H01M 10/052, H01M 4/131, H01M 4/134, H01M 4/36, H01M 4/58, H01M 10/0525

(54) **NOUVELLE COMPOSITION POUR LA FABRICATION D'ELECTRODES, ELECTRODES ET BATTERIES EN RESULTANT**
NEUE ZUSAMMENSETZUNG ZUR HERSTELLUNG VON ELEKTRODEN SOWIE ELEKTRODEN UND BATTERIEN AUS DIESER ZUSAMMENSETZUNG
NEW COMPOSITION FOR THE MANUFACTURE OF ELECTRODES AND ELECTRODES AND BATTERIES RESULTING THEREFROM

(30) Priorité: 04.06.2007 FR 0703940
(43) Date de publication de la demande: 21.04.2010
(73) Titulaire: Commissariat à l'Énergie Atomique et aux Énergies Alternatives, 75015 Paris (FR); Centre National de la Recherche Scientifique, 75016 Paris (FR)
(72) Inventeur: JOUANNEAU-SI LARBI, Séverine, F-38590 Sillans (FR); PORCHER, Willy, F-49240 Avrille (FR); LESTRIEZ, Bernard, F-44000 Nantes (FR); GUYOMARD, Dominique, F-44880 Sautron (FR)
(74) Mandataire: Corizzi, Valérie
(86) Numéro de dépôt international: PCT/FR2008/000758
(87) Numéro de publication internationale: WO 2009/004182

(56) Documents cités:
- EP-A- 0 905 804
- EP-A- 1 722 439
- WO-A-02/47188
- WO-A-95/24741
- WO-A-2006/052313
- DE-A1- 10 118 639
- DE-A1- 10 250 747
- US-A1- 2002 048 706
- US-A1- 2003 134 196
- US-A1- 2004 048 154
- T. CASSAGNEAU ET AL.: "High Density Rechargeable Lithium-Ion Batteries Self-Assembled From Graphite Oxide Nanoplatelets and Polyelectrolytes" ADVANCED MATERIALS, vol. 10, no. 11, 3 août 1998 (1998-08-03), pages 877-881, XP000777031 ISSN: 0935-9648

## Description

L'invention a pour objet une nouvelle composition pour la fabrication d'électrodes composites utilisables dans les dispositifs électrochimiques comme les batteries, les supercapacités, les piles, les cellules asymétriques,...

En particulier, les batteries au lithium sont une source de stockage très prometteuse pour le véhicule électrique ou le véhicule hybride et sont déjà bien implantées dans les équipements portables. Les performances de ces batteries, en terme de densité d'énergie (mesurée en Wh/kg ou en Wh/l), sont largement supérieures à celles des batteries de type nickel-cadmium (NiCd) et nickel-hydrure métallique (NiMH),

Ces batteries au lithium comportent notamment des électrodes négatives. L'électrode négative de l'accumulateur (partie élémentaire d'une batterie) est soit en lithium métallique (on parle de la filière technologique Li-métal), soit un composé hôte du lithium par exemple le graphite (on parle de la filière technologique lithium-ion).

Une batterie Li-ion est alors composée de deux électrodes composites qui génèrent un courant électrique à travers des réactions électrochimiques. Une électrode composite pour batteries Li-ion est composée d'un matériau conducteur électronique et d'un matériau d'insertion, qui suivant son potentiel électrochimique, lui confère la propriété de matériau cathodique ou anodique.

En cours d'utilisation, donc lors de la décharge de l'accumulateur, le lithium relâché par l'électrode négative (matériau d'intercalation hôte <H>), sous forme ionique Li⁺, migre à travers l'électrolyte conducteur ionique et vient s'intercaler dans le réseau cristallin du matériau actif de l'électrode positive (composé d'insertion du lithium de type oxyde métallique <MLi>). Le passage de chaque ion Li⁺ dans le circuit interne de l'accumulateur est exactement compensé par le passage d'un électron dans le circuit externe, générant ainsi un courant électrique. La densité d'énergie massique libérée par ces réactions est à la fois proportionnelle à la différence de potentiel entre les deux électrodes et à la quantité de lithium qui sera intercalée dans le matériau d'insertion. Elle est également inversement proportionnelle à la masse totale du système.

La conductivité électronique du matériau d'insertion seul est généralement insuffisante pour des applications en puissance. Ainsi un réseau de conduction électronique doit permettre la circulation des électrons du collecteur de courant au matériau d'insertion. Un agent conducteur électronique est ajouté à l'électrode.

Typiquement, une méthode pour obtenir une couche épaisse (entre 1 µm et 1 mm) d'électrode composite est une méthode par voie solvant qui peut se décomposer en trois étape : une encre est premièrement préparée en incorporant et en mélangeant à un solvant le matériau d'insertion, le conducteur électronique et un liant. La dispersion et l'homogénéité des constituants de l'encre sont des propriétés requises pour obtenir une électrode composite satisfaisante. Ensuite un procédé tel que l'enduction ou la sérigraphie permet de mettre en forme l'électrode composite directement sur le collecteur de courant à partir de l'encre. Suivant la technique employée, les propriétés rhéologiques de l'encre sont optimisées. Enfin l'électrode composite est séchée par évaporation du solvant et le liant permet alors d'assurer la tenue mécanique de l'électrode.

Globalement, la quantité de conducteur électronique à ajouter doit rester minimale afin de maximiser les densités d'énergie de la batterie. Ainsi le réseau de conduction électronique doit être efficace et pour cela satisfaire trois conditions. Premièrement d'un point de vue macroscopique, l'électrode doit avoir une conductivité électronique volumique élevée. Le seuil de percolation, le point critique pour lequel l'électrode passe d'un comportement isolant à conducteur, doit être atteint. D'un point de vue microscopique, la densité de points de contact à la surface du matériau d'insertion avec le réseau conducteur électronique doit être élevée, afin que le nombre de points triples entre l'électrolyte, le matériau d'insertion et le conducteur électronique, c'est-à-dire les sites de la réaction d'insertion et de désinsertion, soient nombreux. Une troisième condition peut être donnée pour améliorer la conductivité électronique. Il faut que les contacts entre le matériau d'insertion et le conducteur électronique soient de bonne qualité afin de réduire la résistance de contact. Il est préférable d'avoir des contacts plan-plan plutôt que des contacts ponctuels par exemple. Il est aussi préférable de réduire la distance entre le matériau d'insertion et l'agent conducteur électronique à l'endroit de ces contacts.

Les problèmes résolus par la présente invention sont les suivants : préparer une électrode composite par voie aqueuse, avec une densité d'énergie améliorée par rapport aux électrodes de l'art antérieur, une bonne tenue mécanique, c'est-à-dire une tenue suffisante pour que l'électrode soit manipulable lors de la fabrication de la batterie, et des performances électrochimiques élevées en puissance, comme la capacité d'insertion/désinsertion du Li qui doit être importante, en particulier aux forts régimes de courant. On a cherché à mettre au point une composition pour la préparation d'une électrode qui ne nécessitera pas la maîtrise du pH lors de cette fabrication contrairement aux compositions de l'art antérieur.

La méthode classique de préparation d'une cathode pour accumulateur Lithium-ion est la suivante : tout d'abord un matériau d'insertion (par exemple LiCoO₂, LiNiO₂, LiMn₂O₄, LiMnO₂ ou un mélange de ces matériaux) ou des agglomérats du matériau d'insertion, de dimension de 1 à 50 µm sont dispersés dans un solvant organique. A cette dispersion est additionné du noir de carbone électroconducteur et un liant du type polytétrafluoroéthylène ou difluorure de polyvinylidène. Puis le mélange est appliqué et pressé sur une feuille d'aluminium qui sert de collecteur de courant.

DE 102 50 747 11 et DE 101 18 639 11 décrivent une batterie au lithium comprenant une cathode constituée d'un matériau d'intercalation métallique Li-Co, un liant polymérique, un composé polyvinylique, un solvant aprotique choisi parmi les carbonates d'alkyle (carbonate de diméthyle dans les exemples). L'anode comprend un matériau carboné d'intercalation de lithium, un liant polymère, un composé polyvinylique et un solvant aprotique choisi parmi les carbonates d'alkyle (carbonate de diméthyle dans les exemples).

EP 1 722 439 A décrit une batterie électrolytique non aqueuse comprenant une électrode positive, une électrode négative et un électrolyte non aqueux. L'électrode négative comprend un collecteur de courant dont l'une ou les deux surfaces dudit collecteur est recouverte(s) par une composition comprenant un oxyde composite Li-Ti ; un matériau conducteur qui peut être un noir de carbone ; et un liant choisi parmi le PTFE, le PVdF, un caoutchouc fluoré, un caoutchouc styrène-butadiène. La fabrication de l'électrode se fait en mettant les constituants en suspension dans un solvant organique, suivi d'un séchage et pressage. L'électrode positive comprend un collecteur de courant dont l'une ou les deux surfaces dudit collecteur est recouverte(s) par une composition comprenant un oxyde métallique tel qu'un oxyde composite de lithium avec un métal de transition ; un polymère tel que le polyaniline ou le polypyrrole ; et un liant choisi parmi le PTFE, le PVdF, un caoutchouc fluoré. La fabrication de l'électrode se fait en mettant les constituants en suspension dans un solvant organique, suivi d'un séchage et pressage. L'électrolyte non aqueux est préparé en dissolvant un électrolyte tel que les sels de lithium dans un solvant organique tel que les carbonates cycliques ou linéaires. Les exemples montrent que toutes les composition sont préparées en milieu organique.

WO 2006/052313 A concerne une composition d'électrode pour batterie secondaire comprenant un matériau sous forme de poudre (métaux ou leurs alliages), permettant l'intercalation du lithium ; et un liant polyimide (cyclo)aliphatique qui assure une adhérence élevée des particules de métaux ou d'alliages métalliques. La composition d'électrode peut également comprendre un diluant conducteur comme par exemple le noir de carbone. Comme indiqué dans les exemples, la composition d'électrode est préparée en milieu solvant organique.

US 2002/0048706 A1 décrit une électrode comprenant un composé d'intercalation du lithium de formule LiₓM_{y}N₂O₂ (M et N étant des métaux de transition et des éléments des principaux groupes et x, y et z sont entre 0 à 1) ; un matériau conducteur électrique comme par exemple le noir de carbone ; et un matériau conducteur d'ions lithium sous forme d'une matrice polymérique. La polyaniline est citée comme un exemple de polymère conducteur électronique. Les électrodes sont préparées à partir de compositions en milieu solvant.

EP 905 804 A décrit un procédé de préparation d'une électrode pour une batterie à électrolyte non aqueux. L'électrode comprend un collecteur métallique et une couche d'un matériau actif et une pâte d'un polymère. La couche de matériau actif comprend le matériau actif comme par exemple LiCoO₂ ; un liant ; un solvant et éventuellement des additifs électro-conducteurs. Le polymère, qui peut être par exemple du PVdF, est appliqué sur la couche de matériau actif. Le solvant utilisé pour la préparation du matériau actif de l'électrode et de la pâte de polymère est organique (NMP).

US 2004/0048154 A1 décrit une électrode positive pour une batterie au lithium-soufre, comprenant une matière active positive à base de soufre, un agent conducteur (tel que le noir du carbone), un liant organique et un additif incluant un polymère ayant au moins un groupe amino dans sa chaîne principale ou dans ses chaînes latérales, comme par exemple la poly(éthylèneimine).

US 2003 013419A1 décrit une batterie secondaire à électrolyte non aqueux comprenant une électrode positive constituée d'un matériau composite à base de polyaniline et de noir de carbone.

T. Cassagneau et al. (Advanced Materials, vol. 10, no. 11, 1998) décrit la préparation de piles rechargeables au lithium à haute densité par auto-assemblage de nanoplaquettes d'oxyde de graphite avec du poly(oxyde d'éthylène) et un polyélectrolyte cationique comme le poly(chlorure de diallyldiméthylammonium).

WO 95/24741A décrit une électrode, en particulier une cathode, contenant un composé particulaire électro-actif, recouvert d'une composition d'un polymère conducteur comme la polyaniline, et son utilisation dans les cellules électrochimiques.

Des dispersions aqueuses pour la préparation d'une électrode ont été décrites dans WO 02/47188A1. Ces dispersions ont l'avantage de ne pas faire appel à l'utilisation de solvants organiques, jugés nocifs. Au lieu d'un liant classique, les compositions comprenent une macromolécule hydrosoluble telle que de la gélatine, des dérivés de la cellulose ou d'autres polyélectrolytes naturels. Selon le procédé enseigné par ce document, l'auto-assemblage de la composition s'effectue par floculation du noir de carbone avec les particules de matériau d'insertion pré-traitées avec de la gélatine (ou différents polyélectrolytes naturels). La quantité de carbone à introduire pour assurer un réseau de percolation efficace peut ainsi être réduite et la densité d'énergie de l'électrode est optimisée. Egalement la polarisation des cathodes préparées de la sorte est considérablement réduite.

Toutefois, les polyélectrolytes naturels, comme la gélatine, ont des structures chimiques souvent complexes et peu régulières. De plus, leur qualité varie d'un lot à l'autre, ce qui pose des problèmes de reproductibilité et de qualité des performances.

Dans le procédé renseigné par ce document, l'auto-assemblage de la composition s'effectue par floculation du noir de carbone avec les particules de matériau d'insertion, ce qui a pour inconvénient l'utilisation de polyélectrolytes de haut poids moléculaire et un épaississement du polymère situé entre le noir de carbone et les particules de matériau d'insertion.

Le pH, dans le procédé de l'art antérieur, est contrôlé pour obtenir une configuration du type oursin du polymère, ce qui a pour inconvénient de compliquer le procédé et de ne pas être compatible avec tous les matériaux d'insertion.

Le pH naturel d'une suspension aqueuse d'un oxyde est généralement compris entre 7 et 10 et son point de charge nulle est généralement inférieur à 7. Ainsi un oxyde a naturellement une charge de surface négative. Pour les conducteurs électroniques, et plus précisément pour un noir de carbone, du fait de son élaboration à haute température, sa charge de surface est généralement faible car il possède très peu de groupes ionisables en surface. Pour son point de charge nulle, des valeurs regroupées autour de 6,5 sont rapportées. Ainsi en suspension aqueuse, les charges de surface des deux matériaux de l'électrode composite sont de même signe.

Certains oxydes ne se prêtent pas à une modification de pH dans le but d'influencer la charge de surface de l'oxyde. Pour une suspension de LiFePO₄ par exemple, L'introduction d'un acide ou d'une base entraîne une substitution des ions lithium par les protons ou une substitution des ions phosphate par les ions hydroxydes ce qui entraîne une évolution de l'oxyde d'une part, et d'autre part l'impossibilité de maîtriser le pH de la suspension.

On a donc cherché à mettre au point un procédé et des compositions, qui donnent accès à des électrodes de densité d'énergie plus élevée, qui aient des performances améliorées, avec une résistance interfaciale entre le collecteur de courant et l'électrode composite qui soit beaucoup plus faible. En outre, le procédé que l'on a mis au point ne requiert pas de modification du pH.

L'un des objectifs de la présente invention a été de favoriser le couplage en suspension du matériau d'insertion et de l'agent conducteur par un mécanisme d'auto-assemblage basé sur la complémentarité du signe de la charge de surface des deux matériaux d'une électrode composite pour batteries Li-ion.

La solution aux problèmes énoncés ci-dessus a été la mise au point d'une nouvelle composition pour la fabrication d'une électrode composite.

La composition de l'invention est caractérisée par le fait qu'elle comporte au moins :
(i) un matériau d'insertion du lithium ;
(ii) un matériau conducteur électronique ;
(iii) un polyélectrolyte cationique amino-fonctionnel choisi parmi les polymères issus de la combinaison de monomères porteurs de fonctions choisies parmi la liste suivante : aminal, oxime, nitrile, imine, amine primaire, amine secondaire, amine tertiaire, pyridine, énamine, ynamine, hydrazone, amide, aminoacide, aminoester, isocyanate, nitrène, carbamate, carbazate, hydrazine, oxaziridine, β-lactame, énamide, cyanhydrinc, pyrimidine, hydropyrimidine, pyrazine, pipérazine, imidazolidine, pyridazine, aziridine, azétidine, pyrrolidine, pipéridine, oxazole, oxazoline, oxazolidine, oxazolidinone, imidazoles, pyrrole, acide carbamique, urée, imide, acide hydroxymique, triazole et isooxazole, éventuellement en combinaison avec des monomères non ioniques ;
(iv) de l'eau.

La composition de l'invention est préparée avantageusement de façon extemporanée au moment de la fabrication de l'électrode. Elle résulte du mélange de deux compositions qui vont être définies ci-dessous :
■ Une suspension aqueuse A, qui comprend l'un des deux matériaux de l'électrode que sont les matériaux d'insertion à base de lithium (i) et le conducteur électronique (ii), ainsi qu'au moins un polyélectrolyte cationique amino-fonctionnel (iii) choisi parmi les polymères issus de la combinaison de monomères porteurs de fonctions choisies parmi la liste suivantes : aminal, oxime, nitrile, imine, amine primaire, amine secondaire, amine tertiaire, pyridine, énamine, ynamine, hydrazone, amide, aminoacide, aminoester, isocyanate, nitrène, carbamate, carbazate, hydrazine, oxaziridine, β-lactame, énamide, cyanhydrine, pyrimidine, hydropyrimidine, pyrazine, pipérazine, imidazolidine, pyridazyne, aziridine, azétidine, pyrrolidine, pipéridine, oxazole, oxazoline, oxazolidine, oxazolidinone, imidazoles, pyrrole, acide carbamique, urée, imide, acide hydroxymique, triazole et isooxazole, éventuellement en combinaison avec des monomères non ioniques, la quantité de polyélectrolyte étant comprise entre 1.10⁻⁵ et 5 % en masse par rapport à la quantité du matériau (i) ou (ii) également présent dans A et de préférence entre 1.10⁻³ et 1%.
■ Une composition B, qui peut être sous forme d'une poudre ou sous forme d'une suspension dans l'eau, et qui comprend l'autre matériau de l'électrode, choisi parmi (i) et (ii).

En outre, la composition B peut éventuellement comprendre un ou plusieurs composants choisis parmi :
- un agent dispersant,
- un polyélectrolyte synthétique anionique.

Cette association de la suspension A et de la composition B constitue un autre objet de l'invention.

De façon plus détaillée :
Lorsque l'on veut fabriquer une cathode :
   Le matériau d'insertion de cathode, défini arbitrairement comme ayant un potentiel électrochimique supérieur à 2 V par rapport au couple du lithium, est avantageusement choisi dans le groupe constitué par :
      ■ Les oxydes de métaux de transition à structure spinelle de type LiM₂O₄ avec M qui représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo.

Préférentiellement les oxydes de métaux de transition à structure spinelle sont de type LiM₂O₄ avec M qui représente un atome métallique contenant au moins un des atomes métalliques sélectionnés dans le groupe formé par Mn et Ni.
■ Les oxydes de métaux de transition à structure lamellaire de type LiMO₂ avec M qui représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo.

Préférentiellement les oxydes de métaux de transition à structure lamellaire sont de type LiMO₂ avec M qui représente un atome métallique contenant au moins un des atomes métalliques sélectionnés dans le groupe formé par Mn, Co et Ni.
■ Les oxydes à charpentes polyanioniques de type LiMy(XO_{z})ₙ avec M qui représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo et X représente un atome sélectionné dans le groupe formé par P, Si, Ge, S et As, y, z et n étant des entiers positifs.

Préférentiellement les oxydes à charpentes polyanioniques sont de structure olivine tels que LiFePO₄.
■ Les oxydes à base de vanadium.

Lorsque l'on veut fabriquer une anode :
Le matériau d'insertion d'anode, défini arbitrairement comme ayant un potentiel électrochimique inférieur à 2 V par rapport au couple du lithium, est avantageusement choisi dans le groupe constitué par : un alliage de lithium ; une nano dispersion d'un alliage de lithium dans un oxyde de lithium ; du carbone ; du graphite ; un spinelle de lithium et de titane Li_{i+y}Ti_{2x-x/4}O₄ (0 ≤ x ≤ 1, 0 ≤ y ≤ 1) ; un nitrure de lithium et de métal de transition ; un oxyde de titane, ou un mélange de plusieurs de ces matériaux.

Le conducteur électronique est un matériau avec une conductivité supérieure à 1 S.cm⁻¹ à 25°C. Avantageusement le conducteur électronique a une granulométrie inférieure à celle du matériau d'insertion pour minimiser la fraction de conducteur électronique à incorporer et maximiser ainsi la densité d'énergie de la batterie Li-ion. Avantageusement le conducteur électronique a une surface spécifique importante, supérieure à 10m²g⁻¹ afin de minimiser la fraction de conducteur électronique à incorporer et maximiser ainsi la densité d'énergie de la batterie Li-ion. Bien que le conducteur électronique ne soit pas limité à certaines substances, il est préférentiellement sélectionné parmi le groupe formé par le noir de carbone et le carbone activé. Un mélange de plusieurs types de conducteurs électroniques peut être employé afin de minimiser la quantité de conducteur électronique à incorporer et maximiser ainsi la densité d'énergie de la batterie Li-ion.

Dans le cadre de la présente invention on entend par polyélectrolyte tout polymère soluble dans l'eau qui, en solution, porte de nombreux groupements ionisables (au moins 20% des monomères), qui induisent des charges électrostatiques. L'existence de charges électrostatiques le long de la chaîne moléculaire induit des interactions à moyenne et à courte portée, ce qui confère aux polyélectrolytes des propriétés physico-chimiques remarquables. Les polyélectrolytes ont de nombreux domaines d'application: médecine, papeterie, peinture, industrie agro-alimentaire, cosmétique, pharmacie, traitement de l'eau... Les polyélectrolytes sont utilisés pour leurs propriétés rhéologiques et d'adsorption aux interfaces, généralement irréversible.

Un tensioactif se différencie d'un polyélectrolyte par le fait qu'il ne possède que quelques groupements ionisables, un à trois généralement.

On classe les différents polyélectrolytes en fonction de leur origine ; ainsi on trouve :
- Les polyélectrolytes naturels,
- Les polyélectrolytes synthétiques,
- Les biopolymères modifiés chimiquement.

On les classe également suivant leurs natures :
- Polyélectrolyte anionique à pH > pKa,
- Polyélectrolyte cationique à pH < pKa,
- Polyélectrolyte neutre.

Le polyélectrolyte doit répondre aux différentes contraintes liées à l'introduction d'un polymère dans une électrode pour accumulateur Li-ion, c'est-à-dire, élasticité suffisante pour subir les dilatations lors des cycles d'insertion et de désinsertion, stabilité chimique et surtout électrochimique. Sa fenêtre de stabilité en potentiel doit en effet être compatible avec celle de l'électrode considérée dans la batterie, qui dépend des matériaux et des potentiels de fonctionnement.

Les polyélectrolytes cationiques amino-fonctionnels sont dérivables à l'infini. De préférence on choisit des polyélectrolytes de synthèse. Ce sont des polymères issus de la combinaison de monomères porteurs de fonctions choisies parmi la liste suivante : aminal, oxime, nitrile, imine, amine primaire, amine secondaire, amine tertiaire, pyridine, énamine, ynamine, hydrazone, amide, aminoacide, aminoester, isocyanate, nitrène, carbamate, carbazate, hydrazine, oxaziridine, β-lactame, énamide, cyanhydrine, pyrimidine, hydropyrimidine, pyrazinc, pipérazine, imidazolidine, pyridazine, aziridine, azétidine, pyrrolidine, pipéridine, oxazole, oxazoline, oxazolidine, oxazolidinone, imidazoles, pyrrole, acide carbamique, urée, imide, acide hydroxymique, triazole et isooxazole, éventuellement en combinaison avec des monomères non ioniques.

Quelques exemples sont donnés à titre d'illustration :

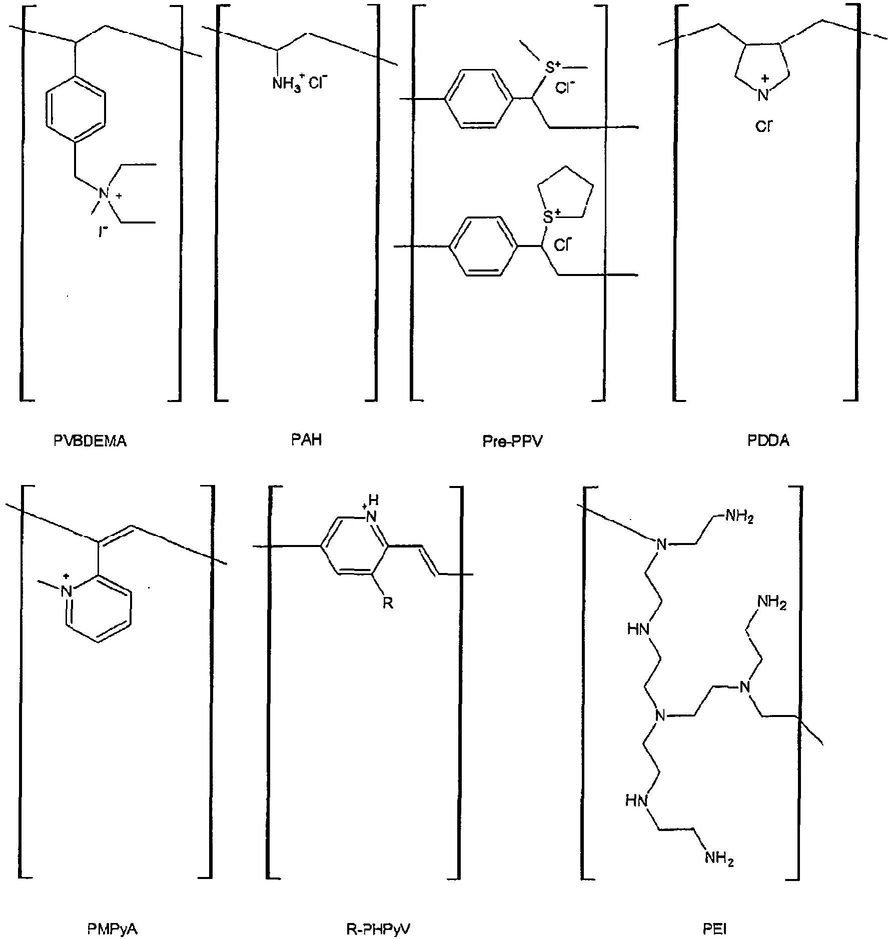

Préférentiellement les polyélectrolytes cationiques amino-fonctionnels sont choisis parmi : le poly(hydrochlorure d'allylamine) (PAH), le poly(chlorure de diallyldiméthylammonium) (PDDA), le poly(vinylpyridine) (PVPy), le poly(aniline) (PANi), le poly(éthylènimine) (PEI) et le poly(chlorure de N, N, N-triméthyl ammonium acrylate d'éthyle) et leurs mélanges.

Préférentiellement ce polyélectrolyte cationique amino-fonctionnel est synthétique afin d'augmenter son efficacité sur l'influence de la charge de surface du matériau sur lequel il est adsorbé. Ainsi les quantités de polyélectrolyte cationique amino-fonctionnel à introduire sont d'autant plus faibles avec un polyélectrolyte synthétique. La densité d'énergie de l'accumulateur Li-ion est alors d'autant plus importante. Egalement la résistance interfaciale, induite par le polymère adsorbé, entre le matériau d'insertion et le conducteur électronique est d'autant plus faible pour un polymère synthétique puisqu'elle est proportionnelle à l'exponentielle de l'épaisseur de polymère adsorbé.

A quantité de polyélectrolyte cationique introduit dans A permet de réaliser l'auto-assemblage de la composition, mais n'est pas suffisante pour que ce polyélectrolyte joue le rôle de liant, ou colle, pour maintenir mécaniquement les différents éléments de l'électrode entre eux.

L'auto-assemblage, ou coagulation induite par le substrat, a été défini notamment par A. Basch et al., Journal of Applied Electrochemistry (2005), 35 : 169-176 : il s'agit d'un procédé pour revêtir une surface de toute nature (céramique, verre, polymère, métal) avec un matériau composé de fines particules. Ce procédé produit un revêtement de la surface pratiquement sans liant, par de petites particules. Ce procédé repose sur la floculation ou la coagulation des particules en suspension lorsque les deux compositions sont mélangées et mises en contact un substrat.

Les polyélectrolytes anioniques sont des polymères issus de la combinaison de monomères porteurs de fonctions choisies parmi la liste suivante : acide carboxylique, acide sulfonique et leurs sels, sulfates, éventuellement en combinaison avec des monomères non ioniques.

Pour les polyélectrolytes anioniques, quelques exemples sont donnés à titre d'illustration :

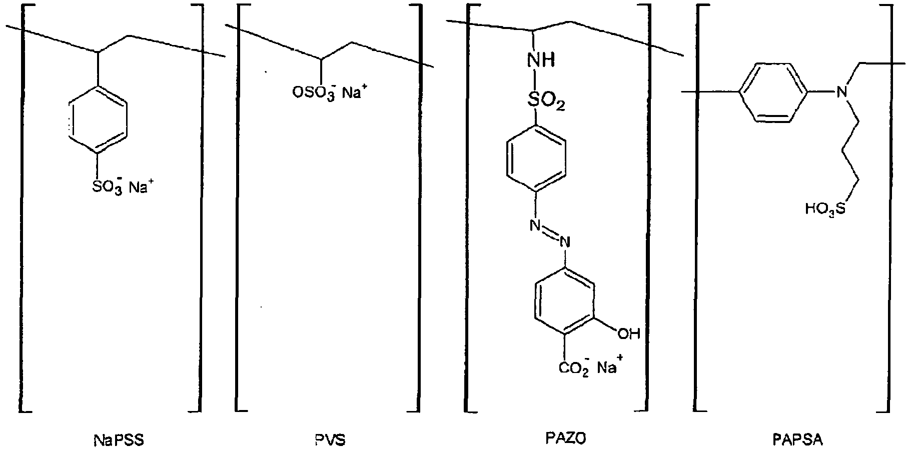

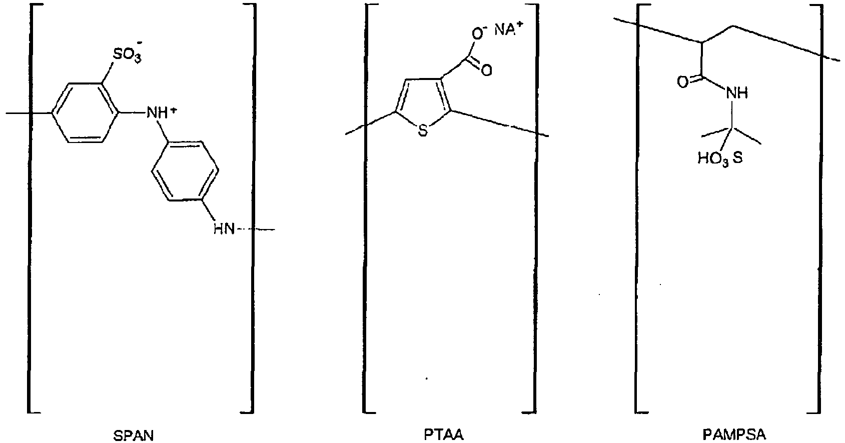

Préférentiellement le polyélectrolyte anionique, utilisé dans la présente invention, présente des groupements acide sulfonique et ester de sulfate comme respectivement le poly(styrène sulfonate de sodium) et le poly(vinyle sulfate de sodium), les contre ions pouvant être différents du sodium.

Le dispersant est un matériau choisi dans le groupe des tensioactifs non ioniques. Préférentiellement le 4-(1,1,3,3-tétraméthylbutyl)phényl-polyéthylène glycol (commercialisé sous la marque Triton ® X100) est employé.

Dans la suspension A, la quantité de polyélectrolyte à introduire dépend de la structure chimique du polyélectrolyte, de la surface spécifique et de la charge de surface du matériau sur lequel sera adsorbé le polyélectrolyte. Cette quantité de polyélectrolyte est comprise entre 1.10⁻⁵ et 5% en masse par rapport à la quantité de matériau de l'électrode (matériau d'insertion (i) ou conducteur électronique (ii)) également présent dans A. Cette quantité de polyélectrolyte est préférentiellement comprise entre 1.10⁻³ et 1 % en masse par rapport à la quantité de matériau de l'électrode ((i) ou (ii)).

Dans la composition B, on peut avoir :
- soit simplement le second matériau de l'électrode dit matériau B (celui de (i) et (ii) qui n'est pas dans la suspension A),
- soit le second matériau de l'électrode, dit matériau B (celui de (i) et (ii) qui n'est pas dans la suspension A), dans un solvant avec éventuellement :
   - Un dispersant : Le rôle de ce dispersant est double. Il permet de mouiller ce matériau par le solvant et de le disperser par une action chimique. Ce dispersant est préférentiellement un tensioactif. La quantité de dispersant dépend de la structure chimique du dispersant, de la surface spécifique et de la nature de la surface du matériau sur lequel sera adsorbé le dispersant. Cette quantité de dispersant est comprise entre 1.10⁻⁵ et 25% en masse par rapport à la quantité de matériau B. Cette quantité de dispersant est préférentiellement comprise entre 1.10⁻³ et 5% en masse par rapport à la quantité de matériau B.
   - Un polyélectrolyte synthétique anionique : Le rôle de ce polyélectrolyte est triple. Il peut permettre de mouiller ce matériau par le solvant, de disperser par une action chimique ce matériau et de fixer le potentiel de surface de ce matériau. La quantité de polyélectrolyte est ajustée suivant la valeur de potentiel zêta du matériau à atteindre. Cette quantité de polyélectrolyte est comprise entre 1.10⁻⁵ et 5% en masse par rapport à la quantité de matériau B. Cette quantité de polyélectrolyte est préférentiellement comprise entre 1.10⁻³ et 1% en masse par rapport à la quantité de matériau B.

Le solvant de la composition B est de l'eau.

Dans la composition de l'invention, résultant du mélange de la composition A (suspension) et de la composition B, éventuellement un épaississant et un liant peuvent être ajoutés pour donner à la composition des propriétés rhéologiques adaptées à la technique de mise en forme, ou pour améliorer la stabilité cinétique de la composition ou assurer la tenue mécanique de l'électrode. Les quantités d'épaississant et de liant sont comprises préférentiellement entre 0 et 10% en masse par rapport à la massc totale (i)+(ii)-(iii).

Dans la composition de l'invention, et dans les associations dont elle est issue, le conducteur électronique (ii) représente entre 1 et 10% en masse par rapport à la masse totale des composants (i) + (ii) + (iii), avantageusement entre 1 et 5%. La quantité de matériau d'insertion (i) est comprise entre 70 et 99% en masse par rapport à la masse totale des composants (i) + (ii) + (iii), préférentiellement entre 85 et 99% en masse.

Les extraits secs des compositions de l'invention sont ajustés de telle manière que les contraintes lors du séchage soient acceptables pour avoir une bonne tenue mécanique de l'électrode composite. Avantageusement ils sont compris entre 25 et 70% en masse. La procédure de préparation ne présente pas a priori d'étapes de filtration, de rinçage ou de séchage.

Des étapes d'agitation mécanique ou de traitement aux ultrasons peuvent être prévues pour la préparation de la composition A, ou de la composition B. A l'issue du mélange de la suspension A et de la composition B, la composition de l'invention est généralement utilisée de façon quasi immédiate pour la fabrication d'une électrode. Toutefois une période de stockage peut être prévue, à condition de maintenir cette composition sous agitation et dans des conditions qui permettent d'éviter l'évaporation des solvants.

Pour la composition A, on peut prévoir un procédé de préparation en au moins deux étapes :
- dissolution du polyélectrolyte cationique amino-fonctionnel (iïi) dans l'eau, puis
- introduction d'un matériau d'électrode choisi parmi : (i) un matériau d'insertion et (ii) un matériau conducteur électronique.

Pour la composition B, on peut prévoir, dans les cas où elle comprend un solvant et un composé choisi parmi un dispersant et/ou un polyélectrolyte anionique, une préparation en au moins deux étapes :
- dissolution du dispersant et/ou du polyélectrolyte anionique dans le solvant, puis
- introduction du matériau d'électrode choisi parmi (i) un matériau d'insertion et (ii) un matériau conducteur électronique.

Suivant les cas, on peut prévoir une étape de filtration de la composition B.

L'invention a encore pour objet un procédé de préparation d'une composition en vue de la fabrication d'une électrode composite, ce procédé comprenant les étapes suivantes :
(a) préparation d'une composition A telle que décrite ci-dessus,
(b) préparation d'une composition B telle que décrite ci-dessus,
(c) mélange des compositions A et B.

Ce mélange peut être complété par une agitation mécanique et/ou un traitement par des ultrasons.

L'invention a encore pour objet un procédé de fabrication d'une électrode composite, ce procédé étant caractérisé en ce que :
1- on prépare une composition suivant le procédé décrit ci-dessus,
2- la composition est appliquée sur un collecteur de courant.

L'application de la composition sur le collecteur de courant se fait de façon connue par enduction ou par sérigraphie, mais aussi par d'autres méthodes de dépôt comme la projection, la pulvérisation. De telles méthodes sont décrites dans « Materials Science and Technology, A Comprehensive Trcatment », vol. 17A, Part I, VCH, 1996.

L'invention a encore pour objet une électrode comprenant un collecteur de courant sur lequel a été déposée une couche d'une composition décrite ci-dessus.

Le collecteur de courant est de préférence un support conducteur bidimensionnel, comme un feuillard plein ou perforé à base de carbone ou de métal, par exemple en cuivre, nickel, acier, inox ou aluminium.

L'épaisseur de la couche de dépôt après séchage peut être comprise entre 1 µm et 1 mm.

Par rapport à une formulation d'électrode composite sans polyélectrolyte, l'introduction d'un polyélectrolyte cationique amino-fonctionnel présente plusieurs avantages :
- Le mouillage, par le solvant de la composition, du matériau sur lequel le polyélectrolyte s'adsorbe est amélioré. La présence des groupements ionisables, induits par l'adsorption du polyélectrolyte, à la surface du matériau diminue sa tension de surface.
- La dispersion dans la composition du matériau sur lequel est adsorbé le polyélectrolyte est meilleure et la répulsion électrostatique stabilise la suspension, limitant ainsi l'agglomération. La quantité de polyélectrolyte est fixée de telle manière que le potentiel zêta du matériau avec le polyélectrolyte adsorbé soit supérieur à une valeur absolue de 30 mV. Cette quantité de polyélectrolyte ajoutée dépend donc de la structure chimique du polyélectrolyte, de la surface spécifique et de la charge de surface du matériau sur lequel sera adsorbé le polyélectrolyte. Cette dispersion peut être favorisée par une action mécanique ou ultrasonique.
- Pour une poudre formée de particules élémentaires qui correspondent à la définition de colloïdes, la stabilité cinétique de la suspension de matériau d'insertion est assurée. Ainsi le polyélectrolyte participe à l'obtention d'électrodes épaisses homogènes dans leur épaisseur.
- Lorsque le second matériau est ajouté à la suspension du matériau sur lequel le polyélectrolyte est adsorbé, et également lors de la phase de séchage, le couplage entre les deux matériaux est favorisé du fait du signe opposé de leurs charges de surface. Ainsi le nombre de points de contact entre le matériau d'insertion et le percolateur électronique est largement augmenté et les contacts entre les deux matériaux sont plus intimes. Au contraire, pour des compositions avec des matériaux ayant des charges de surface de même signe, lors du séchage, on assiste localement à une ségrégation des deux phases avec un faible nombre de contacts entre les deux matériaux et une qualité des contacts qui les rend assimilables à des liaisons ponctuelles.
- L'invention présente l'avantage de favoriser des contacts efficaces entre le collecteur de courant et le matériau sur lequel est adsorbé le polyélectrolyte pendant la phase de séchage. Si le collecteur de courant est l'aluminium, alors il est recouvert d'alumine qui est un oxyde et porte un signe négatif aux pH usuels. Ainsi, en adsorbant un polyélectrolyte cationique amino-fonctionnel on favorise la formation de contacts nombreux et peu résistifs avec le collecteur de courant.
- Le couplage entre les deux matériaux induit par le polyélectrolyte participe également à la tenue mécanique de l'électrode composite.

Enfin, par rapport aux procédés de l'art antérieur, les avantages relatifs apportés par le procédé de l'invention sont les suivants :
- La fraction de polyélectrolyte à introduire est plus faible du fait de la sélectivité des groupements du polyélectrolyte introduit. La densité est donc plus importante.
- La couche de polyélectrolyte entre le matériau d'insertion et le conducteur électronique est plus faible. La résistance interfaciale induite par le polymère adsorbé est donc beaucoup plus faible et les performances des électrodes composites sont bien meilleures pour des densités de courant élevées.
- Le procédé ne nécessite pas de modification de pH.
- Les contacts avec le collecteur de courant sont favorisés. La résistance interfaciale entre le collecteur de courant et l'électrode composite est beaucoup plus faible.
- LiFePO₄ peut être introduit comme matériau de cathode.

L'invention a encore pour objet un dispositif électrochimique comprenant une électrode de l'invention, qu'il s'agisse de la cathode ou de l'anode. L'autre électrode peut être soit une électrode lithium-ion, comprenant un matériau d'insertion d'ion lithium tel que décrit ci-dessus, soit une électrode lithium métallique.

Le dispositif électrochimique comprend en outre une solution d'un sel dont le cation contient au moins un ion lithium, comme par exemple LiClO₄, LiAsF₆, LiPF₆, LiBF₄, LiCH₃SO₃, ... dans un solvant aprotique (éthylène carbonate, propylène carbonate, diméthylcarbonate, diéthylcarbone, méthyléthylcarbonate...), le tout servant d'électrolyte (conducteur ionique).

Les dispositifs électrochimiques de l'invention peuvent être utilisées dans toute application habituelle de ces dispositifs, telles que par exemple les véhicules automobiles, les équipements électroniques portables (baladeur, téléphone, ordinateur, console de jeu...)

### Exemple : Fabrication d'une batterie lithium-ion.

On fabrique une batterie au lithium contenant une électrode positive préparée à partir de LiFePO₄ et d'un polyélectrolyte cationique amino-fonctionnel en suivant le procédé de réalisation suivant :
Pour l'électrode positive :
   - Une suspension A de LiFePO₄ et de polyéthylènimine (Mw=1200 g/mol) est homogénéisée à 200 tours/min pendant 24h. Elle est constituée pour la matière sèche de 99,9% de LiFePO₄ et 0,1 % de PEI.
   - En parallèle une suspension B de Carbone Super P ® (TIMCAL Graphite & Carbone) et de Triton ® X100 (Union Carbide Corporation) est homogénéisée à 200 tours/min pendant 24h. Elle est constituée pour la matière sèche de 95% de Carbone Super P et de 5% de Triton ® X100. La préparation de cette suspension se termine par un traitement aux ultrasons pendant 5 min.
   - Les suspensions A et B sont mélangées (avec un ratio de 95 : 5) pendant 15 min à 10 000 tours/min.
      Sont ajoutées avec des pourcentages respectifs dans l'électrode finale de 2 et 3%, une suspension contenant un épaississant à base d'HPMC (hydroxypropylméthylcellulose) (Mn=86000 g/mol) et une suspension contenant un liant de type un mélange de PVA-PEG (alcool polyvinylique-polyéthylène glycol)(Mw=78000 g/mol pour le PVA).
   - La suspension est agitée à 10000 tours/min pendant 15 min.
   - La composition est déposée sur un collecteur de courant en aluminium (20 µm d'épaisseur).
   - Le sel de la batterie est LiPF₆ (1M) et le solvant aprotique un mélange d'éthylène carbonate, de propylène carbonate et de diméthylcarbonate en proportion 1 : 1 : 3.
Pour l'électrode négative :
   - Une suspension A de Carbone Super P ® (Timcal Graphite & Carbon) et de poly(vinylpyridine) (Polysciences Ltd.) est homogénéisé à 200trs/min pendant 24h. Elle est constituée pour la matière sèche de 99,5% de Carbone super P ® et de 0,5% de PVPy. La préparation de cette suspension se termine par un traitement aux ultrasons de 5 min.
   - La suspension A et Li₄Ti₅Q₁₂ sont mélangés (avec un ratio 2 : 98) pendant 15 min à 10 000 trs/min.
   - Une suspension aqueuse contenant 1 et 2% respectivement d'épaisseur et de liant est ajouté. L'épaississant est une carboxyméthyle cellulose (Mw=250 000 g/mol) et le liant est un copolymère de styrène butadiène (BASAF).
   - La composition est déposée sur un collecteur de courant en cuivre (épaisseur 20 µm).

## Revendications

1. Association comprenant une suspension aqueuse A et une composition B, **caractérisée en ce que**
la suspension aqueuse A comprend :
■ l'un des deux matériaux choisi parmi :
(i) les matériaux d'insertion du lithium,
(ii) un conducteur électronique,
ainsi que
■ (iii) au moins un polyélectrolyte cationique amino-fonctionnel choisi parmi les polymères issus de la combinaison de monomères porteurs de fonctions choisies parmi la liste suivante : aminal, oxime, nitrile, imine, amine primaire, amine secondaire, amine tertiaire, pyridine, énamine, ynamine, hydrazone, amide, aminoacide, aminoester, isocyanate, nitrène, carbamate, carbazate, hydrazine, oxaziridine, β-lactame, énamide, cyanhydrine, pyrimidine, hydropyrimidine, pyrazine, pipérazine, imidazolidine, pyridazene, aziridine, azétidine, pyrrolidine, pipéridine, oxazole, oxazoline, oxazolidine, oxazolidinone, imidazoles, pyrrole, acide carbamique, urée, imide, acide hydroxymique, triazole et isooxazole, éventuellement en combinaison avec des monomères non ioniques, la quantité de polyélectrolyte étant comprise entre 1.10⁻⁵ et 5 % en masse par rapport à la quantité du matériau (i) ou (ii) également présent dans A, et que
la composition B, qui peut être sous forme d'une poudre ou sous forme d'une suspension dans l'eau, comprend l'autre matériau choisi parmi (i) et (ii).

2. Association selon la revendication précédente, **caractérisée en ce que** le matériau d'insertion du lithium est choisi dans le groupe constitué par :
■ Les oxydes de métaux de transition à structure spinelle de type LiM₂O₄ avec M qui représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo.
■ Les oxydes de métaux de transition à structure lamellaire de type LiMO₂ avec M qui représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo.
■ Les oxydes à charpentes polyanioniques de type LiM_{y}(XO_{z})ₙ avec M qui représente un atome métallique contenant au moins un des atomes métalliques sélectionnés dans le groupe formé par Mn, Fe, Co, Ni, Cu, Mg, Zn, V, Ca, Sr, Ba, Ti, Al, Si, B et Mo et X représente un atome sélectionné dans le groupe formé par P, Si, Ge, S et As, y, z et n étant des entiers positifs.
■ Les oxydes à base de vanadium.

3. Association selon la revendication 1, **caractérisée en ce que** le matériau d'insertion du lithium est choisi dans le groupe constitué par : un alliage de lithium ; une nano dispersion d'un alliage de lithium dans un oxyde de lithium ; du carbone ; du graphite ; un spinelle de lithium et de titane Li_{1+y}Ti_{2x-x/4}O₄ (0 ≤ x ≤ 1, 0 ≤ y ≤ 1) ; un nitrure de lithium et de métal de transition ; un oxyde de titane, ou un mélange d'un de ces matériaux.

4. Association selon l'une quelconque des revendications précédentes, **caractérisée en ce que** le conducteur électronique est sélectionné parmi le groupe formé par le noir de carbone, le carbone activé et leurs mélanges.

5. Association selon l'une quelconque des revendications précédentes, **caractérisée en ce que** le polyélectrolyte cationique amino-fonctionnel est choisi parmi : le poly(hydrochlorure d'allylamine) (PAH), le poly(chlorure de diallyldiméthylammonium) (PDDA), le poly(vinylpyridine) (PVPy), le poly(aniline) (PANi), le poly(éthylènimine) (PEI) et le poly(chlorure de N, N, N-triméthyl ammonium acrylate d'éthyle) et leurs mélanges.

6. Association selon l'une quelconque des revendications précédentes, **caractérisée en ce que** la quantité de polyélectrolyte est comprise entre 1.10⁻³ et 1%, en masse par rapport à la quantité du matériau choisi parmi le matériau d'insertion (i) et le conducteur électronique (ii) également présent dans A.

7. Association selon l'une quelconque des revendications précédentes, **caractérisée en ce que** le conducteur électronique (ii) représente entre 1 et 10% en masse par rapport à la masse totale des composants (i) + (ii) + (iii), avantageusement entre 1 et 5%.

8. Association selon l'une quelconque des revendications précédentes, **caractérisée en ce que** la quantité de matériau d'insertion (i) est comprise entre 70 et 99% en masse par rapport à la masse totale des composants (i) + (ii) + (iii), préférentiellement entre 85 et 99% en masse.

9. Association selon l'une quelconque des revendications précédentes, **caractérisée en ce que** la composition B comprend en outre un ou plusieurs composants choisis parmi :
- un agent dispersant,
- un polyélectrolyte synthétique anionique.

10. Composition résultant du mélange des compositions A et B de l'association selon l'une quelconque des revendications précédentes, **caractérisée par le fait qu'**elle comporte au moins :
(i) un matériau d'insertion du lithium ;
(ii) un matériau conducteur électronique ;
(iii) un polyélectrolyte cationique amino-fonctionnel choisi parmi les polymères issus de la combinaison de monomères porteurs de fonctions choisies parmi la liste suivante : aminal, oxime, nitrile, imine, amine primaire, amine secondaire, amine tertiaire, pyridine, énamine, ynamine, hydrazone, amide, aminoacide, aminoester, isocyanate, nitrène, carbamate, carbazate, hydrazine, oxaziridine, β-lactame, énamide, cyanhydrine, pyrimidine, hydropyrimidine, pyrazine, pipérazine, imidazolidine, pyridazine, aziridine, azétidine, pyrrolidine, pipéridine, oxazole, oxazoline, oxazolidine, oxazolidinone, imidazoles, pyrrole, acide carbamique, urée, imide, acide hydroxymique, triazole et isooxazole, éventuellement en combinaison avec des monomères non ioniques ;
(iv) de l'eau.

11. Composition selon la revendication 10, **caractérisée en ce que** son extrait sec est compris entre 25 et 70%.

12. Procédé de préparation d'une composition selon l'une quelconque des revendications 10 et 11, **caractérisé en ce qu'**il comporte les étapes suivantes :
(a) préparation d'une composition A en au moins deux étapes :
- dissolution du polyélectrolyte cationique amino-fonctionnel (iii) dans l'eau, puis
- introduction du premier matériau choisi parmi : (i) un matériau d'insertion et (ii) un matériau conducteur électronique.
(b) préparation d'une composition B,
(c) mélange des compositions A ct B.

13. Procédé de fabrication d'une électrode composite, ce procédé étant **caractérisé en ce que** :
1- on prépare une composition selon l'une quelconque des revendications 10 et 11 en suivant le procédé selon la revendication 12,
2- la composition est appliquée sur un collecteur de courant.

14. Procédé selon la revendication 13, **caractérisée en ce que** l'application de la composition sur le collecteur de courant se fait par enduction ou par sérigraphie.

15. Electrode comprenant un collecteur de courant sur lequel a été déposée une couche d'une composition selon l'une quelconque des revendications 10 et 11.

16. Electrode selon la revendication 15, **caractérisée en ce que** le collecteur de courant est un support conducteur bidimensionnel, comme un feuillard plein ou perforé à base de carbone ou de métal.

17. Dispositif électrochimique comprenant une électrode selon l'une des revendications 15 et 16.

18. Dispositif électrochimique selon la revendication 17, **caractérisée en ce que** l'électrolyte est une solution d'un sel dont le cation contient au moins un ion lithium, dans un solvant aprotique.

19. Utilisation d'un dispositif électrochimique selon l'une des revendications 17 et 18 dans un véhicule automobile ou dans un équipement électronique portable.

## Claims

1. Association comprising an aqueous suspension A and a composition B, **characterised in that** the suspension A comprises:
■ one of the two materials selected from:
(i) lithium insertion materials,
(ii) an electronic conductor,
and
■ (iii) at least one amino-functional cationic polyelectrolyte selected from the polymers produced by the combination of monomers carrying functional groups selected from the following list: aminal, oxime, nitrile, imine, primary amine, secondary amine, tertiary amine, pyridine, enamine, ynamine, hydrazone, amide, amino-acid, amino-ester, isocyanate, nitrene, carbamate, carbazate, hydrazine, oxaziridine, β-lactam, enamide, cyanhydrin, pyrimidine, hydropyrimidine, pyrazine, piperazine, imidazolidine, pyridazine, aziridine, azetidine, pyrrolidine, piperidine, oxazole, oxazoline, oxazolidine, oxazolidinone, imidazoles, pyrrole, carbamic acid, urea, imide, hydroxymic acid, triazole, and isooxazole, optionally in combination with non-ionic monomers, the quantity of polyelectrolyte being between 1.10⁻⁵ and 5% by mass of the quantity of material (i) or (ii) also present in A, and **in that** composition B, which may be in the form of a powder or in the form of a suspension in water, comprises the other material selected from (i) and (ii).

2. Association according to the preceding claim, **characterised in that** the lithium insertion material is selected from the group consisting of:
■ Transition metal oxides having a spinel structure of the LiM₂O₄ type where M is a metal atom comprising at least one of the metal atoms selected from the group formed by Mn, Fe, Co, Ni, Cu, Mg, Zn, V, Ca, Sr, Ba, Ti, Al, Si, B and Mo,
■ Transition metal oxides having a lamellar structure of the LiMO₂ type where M is a metal atom comprising at least one of the metal atoms selected from the group formed by Mn, Fe, Co, Ni, Cu, Mg, Zn, V, Ca, Sr, Ba, Ti, Al, Si, B and Mo,
■ polyanionic-structured oxides of the LiM_{y}(XO_{z})ₙ. type where M is metal atom containing at least one of the metal atoms selected from the group formed by Mn, Fe, Co, Ni, Cu, Mg, Zn, V, Ca, Sr, Ba, Ti, Al, Si, B and Mo and X is an atom selected from the group formed by P, Si, Ge, S and As, y, z and n being positive integers.
■ vanadium-based oxides.

3. Association according to claim 1, **characterised in that** the lithium insertion material is selected from the group consisting of: a lithium alloy, a nano-dispersion of a lithium alloy in a lithium oxide, carbon, graphite, a lithium and titanium spinel Li_{1+y}Ti_{2x-x/4}O₄ (0 ≤ x ≤ 1, 0 ≤ y ≤ 1), a lithium and transition metal nitride, a titanium oxide, or a mixture of one of these materials.

4. Association according to any one of the preceding claims, **characterised in that** the electronic conductor is selected from the group formed by carbon black, activated carbon and mixtures thereof.

5. Association according to any one of the preceding claims, **characterised in that** the amino-functional cationic polyelectrolyte is selected from: poly(allylamine hydrochloride) (PAH), poly(diallyldimethylammonium chloride) (PDDA), poly(vinylpyridine) (PVPy), poly(aniline) (PANi), poly(ethylenimine) (PEI), poly(N, N, N-trimethylammonium ethyl acrylate chloride), and mixtures thereof.

6. Association according to any one of the preceding claims, **characterised in that** the quantity of polyelectrolyte is between 1.10⁻³ and 1% by mass of the quantity of the material selected from the insertion material (i) and the electronic conductor (ii) also present in A.

7. Association according to any one of the preceding claims, **characterised in that** the electronic conductor (ii) is between 1 and 10%, and advantageously between 1 and 5%, by mass of the total mass of components (i) + (ii) + (iii).

8. Association according to any one of the preceding claims, **characterised in that** the quantity of insertion material (i) is between 70 and 99% by mass, and preferably between 85 and 99% by mass, of the total mass of components (i) + (ii) + (iii).

9. Association according to any one of the preceding claims, **characterised in that** composition B also comprises one or more components selected from:
- a dispersing agent
- a synthetic anionic polyelectrolyte.

10. Composition resulting from the mixing of compositions A and B of the association according to any one of the preceding claims, **characterised by** the fact that it comprises at least:
(i) a lithium insertion material,
(ii) an electronic conductive material,
(iii) an amino-functional cationic polyelectrolyte selected from the polymers produced by the combination of monomers carrying functional groups selected from the following list: aminal, oxime, nitrile, imine, primary amine, secondary amine, tertiary amine, pyridine, enamine, ynamine, hydrazone, amide, amino-acid, amino-ester, isocyanate, nitrene, carbamate, carbazate, hydrazine, oxaziridine, β-lactam, enamide, cyanhydrin, pyrimidine, hydropyrimidine, pyrazine, piperazine, imidazolidine, pyridazine, aziridine, azetidine, pyrrolidine, piperidine, oxazole, oxazoline, oxazolidine, oxazolidinone, imidazoles, pyrrole, carbamic acid, urea, imide, hydroxymic acid, triazole, and isooxazole, optionally in combination with non-ionic monomers
(iv) water.

11. Composition according to claim 10, **characterised in that** the dry extract thereof is between 25 and 70%.

12. Method of preparing a composition according to either of claims 10 and 11, **characterised in that** it comprises the following steps:
(a) preparation of a composition A in at least two steps:
- dissolution of the amino-functional cationic polyelectrolyte (iii) in water, then
- introduction of the first material selected from: (i) an insertion material and (ii) an electronic conductive material,
(b) preparation of a composition B
(c) mixing of compositions A and B.

13. Method of producing a composite electrode, this method being **characterised in that**
1- a composition according to either of claims 10 and 11 is prepared by the method according to claim 12,
2- the composition is applied to a current collector.

14. Method according to claim 13, **characterised in that** the application of the composition to the current collector is performed by coating or by screen printing.

15. Electrode comprising a current collector on which a layer of a composition according to either of claims 10 and 11 has been deposited.

16. Electrode according to claim 15, **characterised in that** the current collector is a two-dimensional conductive support such as a solid or perforated strip of carbon-based or metal-based.

17. Electro-chemical device comprising an electrode according to either of claims 15 and 16.

18. Electro-chemical device according to claim 17, **characterised in that** the electrolyte is a solution in an aprotic solvent of a salt whose cation contains at least one lithium ion.

19. Use of an electro-chemical device according to either of claims 17 and 18 in a motor vehicle or in portable electronic equipment.

## Patentansprüche

1. Assoziation mit einer wässrigen Suspension A und einer Zusammensetzung B, **dadurch gekennzeichnet, dass**
die wässrige Suspension A Folgendes enthält:
■ eines der beiden Materialien, ausgewählt aus
(i) Lithiumeinlagerungsmaterialien,
(ii) einem elektronischen Leiter,
sowie
■ (iii) mindestens einen aminofunktionellen kationischen Polyelektrolyt, ausgewählt aus den aus der Kombination von Monomeren abgeleiteten Polymeren, die aus folgender Liste ausgewählte Funktionen aufweisen: Aminal, Oxim, Nitril, Imin, primäres Amin, sekundäres Amin, tertiäres Amin, Pyridin, Enamin, Ynamin, Hydrazon, Amid, Aminosäure, Aminoester, Isocyanat, Nitren, Carbamat, Carbazat, Hydrazin, Oxaziridin, β-Laktam, Enamid, Cyanhydrin, Pyrimidin, Hydropyrimidin, Pyrazin, Piperazin, Imidazolidin, Pyridazin, Aziridin, Azetidin, Pyrrolidin, Piperidin, Oxazol, Oxazolin, Oxazolidin, Oxazolidinone, Imidazol Pyrrol, Carbamidsäure, Harnstoff, Imid, Hydroximinsäure, Triazol und Isooxazol, gegebenenfalls in Kombination mit nichtionische Monomeren, wobei die Menge des Polyelektrolyten zwischen 1 x 10⁻⁵ und 5% Massenanteil beträgt, bezogen auf die Menge des in A vorhandenen Materials (i) oder (ii), und dass
die Zusammensetzung B, die pulverförmig oder eine Suspension in Wasser sein kann, das andere aus (i) und (ii) ausgewählte Material enthält.

2. Assoziation nach dem vorhergehenden Anspruch, **dadurch gekennzeichnet, dass** das Lithiumeinlagerungsmaterial ausgewählt ist aus der Gruppe, bestehend aus:
■ den Übergangsmetalloxiden mit Spinellstruktur vom Typ LiM₂O₄, wobei M ein Metallatom darstellt, das mindestens eines der Metallatome enthält, die aus der aus Mn, Fe, Co, Ni, Cu, Mg, Zn, V, Ca, Sr, Ba, Ti, Al, Si, B und Mo gebildeten Gruppe ausgewählt sind,
■ den Übergangsmetalloxiden mit lamellarer Struktur vom Typ LiMO₄, wobei M ein Metallatom darstellt, das mindestens eines der Metallatome enthält, die aus der aus Mn, Fe, Co, Ni, Cu, Mg, Zn, V, Ca, Sr, Ba, Ti, Al, Si, B und Mo gebildeten Gruppe ausgewählt sind,
■ den Oxiden mit polyanionischem Gerüst vom Typ LiM_{y}(XO_{z})ₙ, wobei M ein Metallatom darstellt, das mindestens eines der Metallatome enthält, de aus der aus Mn, Fe, Co, Ni, Cu, Mg, Zn, V, Ca, Sr, Ba, Ti, Al, Si, B und Mo gebildeten Gruppe ausgewählt sind, und X ein Atom darstellt, das aus der aus P, Si, Ge, S und As gebildeten Gruppe ausgewählt ist, und wobei y, z und n positive ganze Zahlen sind, und
■ den Oxiden auf Vanadiumbasis.

3. Assoziation nach Anspruch 1, **dadurch gekennzeichnet, dass** das Lithiumeinlagerungsmaterial aus der Gruppe ausgewählt ist, die aus einer Lithiumlegierung, einer Nanodispersion einer Lithiumlegierung in einem Lithiumoxid, Kohlenstoff, Graphit, einem Lithium- und Titanspinell Li_{1+y} Ti_{2x-x/4}O₄ (0≤x≤1, 0≤y≤1), einem Lithiumnitrid oder aus einer Mischung dieser Materialien besteht.

4. Assoziation nach einem der vorhergehenden Ansprüche, **dadurch gekennzeichnet, dass** der elektronische Leiter ausgewählt ist aus der aus Ruß, Aktivkohle und deren Mischungen gebildeten Gruppe.

5. Assoziation nach einem der vorhergehenden Ansprüche, **dadurch gekennzeichnet, dass** der aminofunktionelle kationische Polyelektrolyt ausgewählt ist aus: Polyallylamin-Hydrochlorid (PAH), Polydiallyldimethyl-Ammoniumchlorid (PDDA), Polyvinylpyridin (PVPy), Polyanilin (PANi), Polyethylenimin (PEI) und Poly-(N,N,N-Trimethylammonium)ethylacrylat-Chlorid und aus ihren Mischungen.

6. Assoziation nach einem der vorhergehenden Ansprüche **dadurch gekennzeichnet, dass** die Menge des Polyelektrolyten zwischen 1 x 10⁻³ und 1% Massenanteil beträgt, bezogen auf die Menge des Materials, das aus dem Einlagerungsmaterial (i) und dem ebenfalls in A vorhandenen elektronischen Leiter (ii) ausgewählt ist.

7. Assoziation nach einem der vorhergehenden Ansprüche, **dadurch gekennzeichnet, dass** der elektronische Leiter (ii) zwischen 1 und 10% Massenanteil beträgt, bezogen auf die Gesamtmasse der Bestandteile (i) + (ii) + (iii), vorzugsweise zwischen 1 und 5%

8. Assoziation nach einem der vorhergehenden Ansprüche, **dadurch gekennzeichnet, dass** die Menge des Einlagerungsmaterials (i) zwischen 70 und 99% Massenanteil beträgt, bezogen auf die Gesamtmasse der Bestandteile (i) + (ii) + (iii), vorzugsweise zwischen 85 und 99%.

9. Assoziation nach einem der vorhergehenden Ansprüche, **dadurch gekennzeichnet, dass** die Zusammensetzung B ferner einen oder mehrere Bestandteile enthält, die ausgewählt sind aus:
- einem Dispergiermittel,
- einem synthetischen anionischen Polyelektrolyt.

10. Zusammensetzung aus einer Mischung der Zusammensetzungen A und B der Assoziation nach einem der vorhergehenden Ansprüche, **dadurch gekennzeichnet, dass** sie mindestens Folgendes enthält:
(i) ein Lithiumeinlagerungsmaterial
(ii) ein elektronisches leitendes Material
(iii) einen aminofunktionellen kationischen Polyelektrolyt, ausgewählt aus den aus der Kombination von Monomeren abgeleiteten Polymeren, die aus folgender Liste ausgewählte Funktionen aufweisen: Aminal, Oxim, Nitril, Imin, primäres Amin, sekundäres Amin, tertiäres Amin, Pyridin, Enamin, Ynamin, Hydrazon, Amid, Aminosäure, Aminoester, Isocyanat, Nitren, Carbamat, Carbazat, Hydrazin, Oxaziridin, β-Laktam, Enamid, Cyanhydrin, Pyrimidin, Hydropyrimidin, Pyrazin, Piperazin, Imidazoidin Pyridazin, Aziridin, Azetidin, Pyrrolidin, Piperidin, Oxazol, Oxazolin, Oxazolidin, Oxazolidinon, Imidazol, Pyrrol, Carbamidsäure, Harnstoff, Imid, Hydroximinsäure, Triazol und Isooxazol, gegebenenfalls in Kombination mit nichtionische Monomeren,
(iv) Wasser.

11. Zusammensetzung nach Anspruch 10, **dadurch gekennzeichnet, dass** ihr Feststoffgehalt zwischen 25 und 70% beträgt.

12. Verfahren zur Zubereitung einer Zusammensetzung nach einem der Ansprüche 10 und 11, **dadurch gekennzeichnet, dass** es folgende Schritte umfasst:
(a) Zubereitung einer Zusammensetzung A in mindestens zwei Schritten:
- Lösen des aminofunktionellen kationischen Polyelektrolyten (iii) in Wasser, dann
- Hinzufügen des ersten Materials ausgewählt aus: (i) einem Einlagerungsmaterial und (ii) einem elektronischen leitenden Material,
(b) Zubereiten einer Zusammensetzung B,
(c) Mischen der Zusammensetzungen A und B.

13. Verfahren zur Herstellung einer Verbundelektrode, welches **dadurch gekennzeichnet ist, dass**
1- eine Zusammensetzung nach einem der Ansprüche 10 und 11 gemäß dem Verfahren von Anspruch 12 zubereitet wird,
2- die Zusammensetzung auf einen Stromabnehmer aufgebracht wird.

14. Verfahren nach Anspruch 13, **dadurch gekennzeichnet, dass** das Aufbringen der Zusammensetzung auf den Stromabnehmer mittels Beschichtung oder Siebdruck erfolgt.

15. Elektrode mit einem Stromabnehmer, auf dem eine Schicht der Zusammensetzung nach einem der Ansprüche 10 und 11 abgeschieden wurde.

16. Elektrode nach Anspruch 15, **dadurch gekennzeichnet, dass** der Stromabnehmer ein zweidimensionaler leitender Träger wie ein Vollband oder Lochband auf Kohlenstoff- oder Metallbasis ist.

17. Elektrochemische Vorrichtung mit einer Elektrode nach einem der Ansprüche 15 und 16.

18. Elektrochemische Vorrichtung nach Anspruch 17, **dadurch gekennzeichnet, dass** der Elektrolyt eine Lösung eines Salzes in einem aprotischen Lösungsmittel ist, dessen Kation mindestens ein Lithiumion enthält.

19. Verwendung einer elektrochemischen Vorrichtung nach einem der Ansprüche 17 und 18 in einem Kraftfahrzeug oder in einem tragbaren elektronischen Gerät.
